# EUROPEAN PATENT SPECIFICATION

(11) **EP 4 491 967 B1**
(45) Date of publication and mention of the grant of the patent: **04.02.2026**
(21) Application number: 23215217.3
(22) Date of filing: 08.12.2023
(51) Int. Cl.: F24H 3/04, F24H 9/20, F24H 15/128, F24H 15/215, F24H 15/219, F24H 15/355, G05D 23/19

(54) **TEMPERATURE ANOMALY HANDLING METHOD FOR HOT AIR HEATING EQUIPMENT**
VERFAHREN ZUR HANDHABUNG VON TEMPERATURANOMALIEN FÜR HEISSLUFTERWÄRMUNGSAUSRÜSTUNG
PROCÉDÉ DE GESTION D'ANOMALIE DE TEMPÉRATURE POUR ÉQUIPEMENT DE CHAUFFAGE D'AIR CHAUD

(30) Priority: 10.07.2023 CN 202310841165
(43) Date of publication of application: 15.01.2025
(73) Proprietor: Zhejiang Prulde Electric Appliance Co., Ltd., Jinhua, Zhejiang 321035 (CN)
(72) Inventor: Yang, Chenghao, Jinhua 321035 (CN)
(74) Representative: karo IP

(56) References cited:
- EP-B1- 1 836 919
- CN-A- 107 027 198
- CN-U- 205 378 241
- DE-U1- 202010 014 821

## Description

### FIELD

The subject matter described herein relates to technical field of operating processes of heating equipment, and more particularly to a temperature anomaly handling method for hot air heating equipment.

### BACKGROUND

A hot air gun is a heating tool that heats air to generate hot air. Hot air guns have a wide array of applications, for example, removing rust, stripping off old pint on a metallic surface, removing self-adhesive stickers, heating to bend a plastic/rubber tube, drying wet wood, heating to shrink packaging film or packaging tube, heating to shrink a polyethylene item for connecting to metal, heating to soften a weldment, or soldering or desoldering an element with hot air.

In existing hot air guns, a fixed upper temperature limit is usually set so as to avoid overheat causing damages. In a case that the heating temperature of heating wire reaches the upper temperature limit, a power supply unit would suspend power supply to the heating wire, whereby the heating wire stops heating. However, in a case that an air outlet of the hot air gun is obstructed shortly so that the hot air cannot be discharged timely, or the hot air fails to be timely discharged due to occurrence of other conditions, the temperature of the heating wire would also rise so that the heating temperature of the heating wire easily reaches the upper temperature limit, causing suspension of the heating. If the issue of failing to discharge hot air timely is quickly resolved, the heating wire would be reenergized to perform heating. As such, the hot air gun makes a determination on whether to suspend heating only based on the actual temperature value of the heating wire that, without considering whether the air outlet is obstructed, which does no help to enhance determination accuracy or ensure operating efficiency of the hot air gun.

EP 1 836 919 B1 describes a hair dryer comprising a heat generating mechanism. DE 20 2010 014 821 U1 describes an air heater. CN 107 027 198 and CN 205 378 241 U1 describe a ceramic heating core assembly of a heat gun.

### SUMMARY

To overcome the above and other drawbacks and disadvantages in conventional technologies, the invention provides a temperature anomaly handling method for hot air heating equipment, which determines whether a temperature anomaly actually occurs through dynamic sensing and suspends heating by a control module in a case of actual occurrence of temperature anomaly on the heating element, thereby improving accuracy in temperature anomaly determination and facilitating enhancement of operating efficiency of the equipment.

To achieve the above and other objects, the invention provides a temperature anomaly handling method for hot air heating equipment, the hot air heating equipment comprising a housing, a control module, a hot air assembly disposed in the housing, a power supply unit configured to supply power, and a temperature sensing element configured to sense a heating temperature, the hot air assembly comprising an electric motor, a fan driven by the electric motor, and a heating element energized to generate heat, the electric motor driving the fan to rotate to deliver the heat generated by the heating element out of the housing via an air outlet to form a hot air flow for heating an object, the power supply unit, the electric motor, and the heating element being all controlled by the control module, the temperature sensing element being in signal connection to the control module, wherein the temperature anomaly handling method comprises:
Step S100, in which in a case that a temperature rise of the temperature sensing element reaches Δ T1 within a first time interval Δ t1, the control module determines occurrence of temperature anomaly based on a temperature signal fed back from the temperature sensing element, and performs step S200;
Step S200, in which the control module starts countdown, and in a case that a temperature rise of the temperature sensing element reaches Δ T2 within a second time interval Δ t2, the control module determines that temperature anomaly lasts based on a temperature signal fed back from the temperature sensing element, and performs step S300;
Step S300, in which the control module executes a protection program

In some implementations, the protection program executed by the control module is to instruct the power supply unit to suspend power supply to the heating element.

In some implementations, the temperature anomaly handling method further comprises step S400, in which in a case that a temperature drop of the temperature sensing element reaches Δ T3 within a third time interval Δ t3, the control module determines that the temperature anomaly is resolved based on a temperature signal fed back from the temperature sensing element and instructs the power supply unit to supply power to the heating element.

In some implementations, the temperature sensing element has a thermal equilibrium temperature (value) Tp, and in step S400, in a case that an actual temperature value of the temperature sensing element exceeds the thermal equilibrium temperature Tp, the control module determines that the temperature anomaly continues based on a temperature signal fed back from the temperature sensing element, the control module acquires in real time the actual temperature value of the temperature sensing element and records a maximum actual temperature value Tmax, and in a case that a temperature drop of the temperature sensing element reaches Δ T3 from the maximum actual temperature value Tmax within a third time interval Δ t3, the control module determines that the temperature anomaly is resolved based on a temperature signal fed back from the temperature sensing element.

In some implementations, the temperature sensing element is configured to sense a temperature of the heating element.

In some implementations, the temperature sensing element is disposed between the electric motor and the heating element.

In some implementations, a divider element is serially connected to a power supply connected loop of the electric motor.

In some implementations, Δ T1 ranges from 2°C to 5°C; and/or, the first time interval Δ t1 ranges from 2s to 4s.

In some implementations, Δ T2 ranges from 2°C to 5°C; and/or, the second time interval Δ t2 ranges from 2s to 4s.

In some implementations, Δ T3 ranges from 3°C to 6°C; and/or, the third time interval Δ t3 ranges from 1s to 3s.

With the technical solution above, the invention offers the following advantages:
1. With the temperature anomaly handling method provided by the invention, if the temperature sensing element has a temperature rise within a first time interval, the control module determines occurrence of temperature anomaly to the equipment based on the temperature signal of the temperature sensing element. If the temperature of the temperature sensing element does not further rise, it indicates that the temperature anomaly is timely resolved; in this case, the heating element continues heating. If the temperature sensing element senses that the temperature continues rising within the second time interval, the control module determines that the temperature anomaly of the equipment still lasts based on the temperature signal of the temperature sensing element, and then the control module executes a protection program; the protection program may be such that the control module instructs the power supply unit to suspend power supply to the heating element, avoiding the heating element from continuing heating in a case that temperature anomaly actually occurs to the equipment , without causing overheat to damage the equipment, thereby improving use safety of the equipment.
   The temperature sensing element determines whether temperature anomaly actually occurs to the equipment based on twice dynamic temperature rise signals; in this way, the temperature anomaly processing method provided according to the invention may significantly enhance determination accuracy; if the temperature anomaly does not really occur, the heating element performs heating normally, which may guarantee operating efficiency of the equipment.
2. If a temperature drop of the temperature sensing element within a third time interval satisfies a preset requirement, it indicates that the heat inside the equipment may be smoothly discharged, and the temperature anomaly has been resolved. In this case, the control module instructs the power supply unit to supply power to the heating element, so that the heating element may perform heating normally. With reasonable setting of the basis for determining whether the temperature anomaly has been resolved, the determination accuracy is enhanced, thereby ensuring operating stability of the equipment.
3. If the actual temperature value of the temperature sensing element exceeds the thermal equilibrium temperature Tp, the control module determines that the temperature anomaly lasts based on the actual temperature value sensed by the temperature sensing element; the control module acquires in real time the actual temperature value sensed by the temperature sensing element and records the maximum actual temperature value Tmax; if a temperature drop of the temperature sensing element reaches Δ T3 from the actual maximum temperature value Tmax within the third time interval, it indicates that the temperature anomaly condition is resolved. The control module determines whether the temperature anomaly condition of the equipment is really resolved based on the dynamic temperature drop signal of the temperature sensing element, which helps to enhance determination accuracy.
4. The temperature sensing element is configured to sense a temperature of the heating element; by reasonably setting the sensing object of the temperature sensing element, the sensing accuracy of the heating temperature is enhanced, thereby improving the accuracy in determining temperature anomaly. The temperature sensing element is exemplarily disposed between the electric motor and the heating element, so that the temperature sensing element may be disposed closer to the heating element as much as possible, thereby further enhancing the accuracy in sensing the heating temperature.
5.The divider element is serially connected on a power supply connected loop of the electric motor; the divider element is configured to adjust the voltage supplied by the power supply unit to the electric motor and further adjust the rotating speed of the electric motor, so that the rotating speed of the electric motor is adapted to heat settings of the equipment.
6. By reasonably setting temperature rise Δ T1, temperature rise Δ T2, first time interval Δ t1, and second time interval Δ t2, misjudgment of the control module is avoided in a case of normal fluctuation of the heating temperature, and the control module may also handle timely in a case of relatively large fluctuation of the heating temperature, thereby guaranteeing determination accuracy, as well as operating stability of the equipment.
7. By reasonably setting the temperature drop Δ T and the third time interval Δ t3, reasonable temperature drop of the temperature sensing element within a reasonable time interval is enabled, ensuring that the control module accurately determines whether temperature anomaly is actually resolved.

### BRIEF DESCRIPTION OF THE DRAWINGS

Fig. 1 is an overall schematic diagram of hot air heating equipment in a first example embodiment;
Fig. 2 is an exploded view of a hot air assembly in the first example embodiment;
Fig. 3 is an arrangement schematic diagram of part of the hot air assembly and a temperature sensing element in the first example embodiment;
Fig. 4 is an electrical connection schematic diagram in the first example embodiment;
Fig. 5 is a flow diagram of a temperature anomaly handling method in the first example embodiment;
Fig. 6 is a temperature change schematic diagram of the temperature sensing element in a normal condition in the first example embodiment;
Fig. 7 is a temperature change schematic diagram of the temperature sensing element in a temperature anomaly condition in the first example embodiment.

Reference Numerals: 100- housing; 110- handle; 120- button; 130- regulator; 200- control module; 300- hot air assembly; 310- electric motor; 320- fan; 330- heating element; 340- air outlet; 350- bracket; 351- bracket body; 352- bracket cover; 360-connecting base; 370- support frame; 380- sleeve; 390- divider element; 400- power supply unit; 500- temperature sensing element.

### DETAILED DESCRIPTION

Hereinafter, the invention will be described in further detail through embodiments with reference to the accompanying drawings. It would be understood that the orientational or positional relationships indicated by the terms "upper," "lower," "left," "right," "longitudinal," "transverse," "inner," "outer," "vertical," "horizontal," "top" and "bottom" refer to those orientational and positional relationships illustrated in the drawings, which are intended only for facilitating description of the invention and simplifying relevant depictions, but not for indicating or implying that the devices or elements compulsorily possess such specific orientations or are compulsorily configured and operated with the specific orientations; therefore, such terms should not be construed as limitations to the invention.

### Example 1

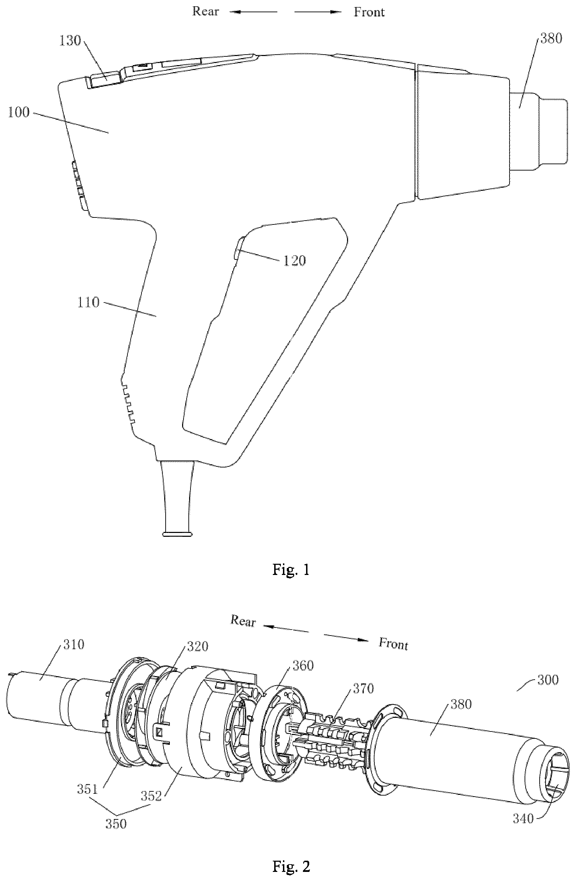

Referring to Figs. 1-7, there is provided a temperature anomaly handling method for hot air heating equipment according to a first example embodiment of the invention, the hot air heating equipment comprising a housing 100, a control module 200, a hot air assembly 300 disposed in the housing 100, a power supply unit 400 for supplying power, and a temperature sensing element 500 for sensing a heating temperature; the hot air assembly 300 comprises an electric motor 310, a fan 320 driven by the electric motor 310, and a heating element 330 energized to generate heat; the electric motor 310 drives the fan 320 to rotate to deliver heat generated by the heating element 330 out of the housing 100 via an air outlet 340 to form a hot air flow for heating an object; the power supply unit 400, the electric motor 310, and the heating element 330 are all controlled by the control module 200; the temperature sensing element 500 is in signal connection to the control module 200.

The temperature anomaly processing method comprises steps of:
Step S100, in which in a case that a temperature rise of the temperature sensing element 500 reaches Δ T1 within a first time interval Δ t1, the control module 200 determines occurrence of temperature anomaly based on a temperature signal fed back from the temperature sensing element 500, and performs step S200;
Step S200, in which the control module 200 starts countdown, and in a case that a temperature rise of the temperature sensing element 500 reaches Δ T2 within a second time interval Δ t2, the control module 200 determines that temperature anomaly lasts based on the temperature signal fed back from the temperature sensing element 500, and performs step S300;
Step S300, in which the control module 200 executes a protection program.

Referring to Fig. 1, hot air heating equipment in this example embodiment is illustrated as a hot air gun. The housing 100 is formed with a handle 110, a button 120 for activating the equipment is provided at a front side of the handle 110, and a regulator 130 configured to regulate heating intensity is provided on the housing 100. In conjunction with Fig. 2, the hot air assembly 300 further comprises a bracket 350, a connecting base 360, a support frame 370, and a sleeve 380; the bracket 350 comprises a bracket body 351 and a bracket cover 352 which are secured together; the fan 320 is rotatably disposed in a cavity enclosed by the bracket body 351 and the bracket cover 352; the fan 320 is disposed at a front end of the electric motor 310 through the bracket 350 and driven by the electric motor 310. The heating element 330 is formed by heating wire, the heating wire being wound over the support frame 370, the sleeve 380 being sleeved outside the support frame 370, a rear end of the support frame 370 being secured to the bracket 350 via the connecting base 360, the air outlet 340 being disposed at a front end of the sleeve 380. When the hot air gun is operating, the heating element 330 is energized to generate heat, the electric motor 310 drives the fan 320 to rotate to form an air flow flowing from rear to front, and heat generated by the heating element 330 is carried by the air flow and blown out of the air outlet 340 to form a hot air flow.

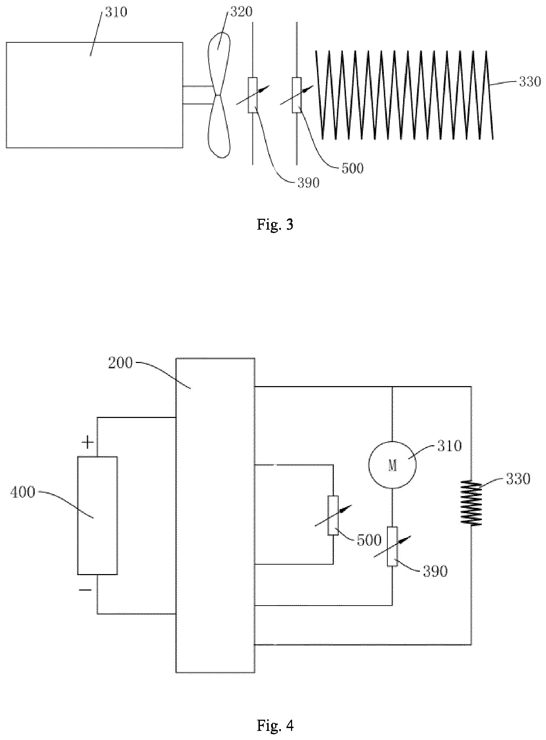

Referring to Fig. 3, the temperature sensing element 500 is configured to sense temperature of the heating element 330. In order to improve sensing accuracy, in this example embodiment, the temperature sensing element 500 is disposed between the electric motor 310 and the heating element 330, so that the heating element 330 is disposed closer to the heating element 330 as much as possible. In some implementations, the temperature sensing element 500 adopts a thermistor; the temperature sensing element 500 may be disposed at a front side of the connecting base 360. It would be understood that the temperature sensing element 500 may also adopt an alternative electronic element having a resistance correspondingly changing with temperature.

Referring to Fig. 4, the power supply unit 400 supplies power to the electric motor 310 and the heating element 330 via the control module 200; to conveniently adjust the hot air intensity of the hot air heating equipment, a divider element 390 is serially connected on a power supply connected loop of the electric motor 310. The divider element 390 is configurable to adjust a voltage supplied by the power supply unit 400 to the electric motor 310, thereby adjusting a rotating speed of the fan 320 driven by the electric motor 310. In this example embodiment, the divider element 390 adopts for example a variable resistor; the divider element 390 is disposed closer to the temperature sensing element 500 as much as possible. It would be appreciated that the divider element 390 may also adopt an alternative structure enabling voltage division, e.g., a voltage divider circuit.

In this example embodiment, the protection program executed by the control module 200 is for example set such that the control module 200 instructs the power supply unit 400 to suspend power supply to the heating element 330, thereby avoiding the heating element 330 from continuously heating when the temperature anomaly actually occurs, without causing the equipment from being overheated and damaged.

The temperature anomaly handling method in this example embodiment further comprises step S400. In step S400, if a temperature drop of the temperature sensing element 500 reaches Δ T3 within a third time interval Δ t3, the control module 200 determines, based on a temperature signal fed back from the temperature sensing element 500, that the temperature anomaly is resolved, and instructs the power supply unit 400 to supply power to the heating element 330.

The temperature sensing element 500 has a thermal equilibrium temperature Tp; in step S400, if an actual temperature value of the temperature sensing element 500 exceeds the thermal equilibrium temperature Tp, the control module 200 determines, based on a temperature signal fed back from the temperature sensing element 500, that the temperature anomaly continues, and the control module 200 acquires in real time the actual temperature value of the temperature sensing element 500 and records a maximum actual temperature value Tmax; if a temperature drop of the temperature sensing element 500 reaches Δ T3 from the maximum actual temperature value Tmax within the third time interval Δ t3, the control module 200 determines, based on the temperature signal fed back from the temperature sensing element 500, that the temperature anomaly is resolved.

In conjunction with Fig. 4, with increase of the voltage supplied by the power supply unit 400 to the heating element 330, the heat generated by the heating element 330 increases, and the temperature of the hot air flow rises. With decrease of the voltage supplied by the power supply unit 400 to the heating element 330, the heat generated by the heating element 330 decreases, and the temperature of the hot air flow drops.

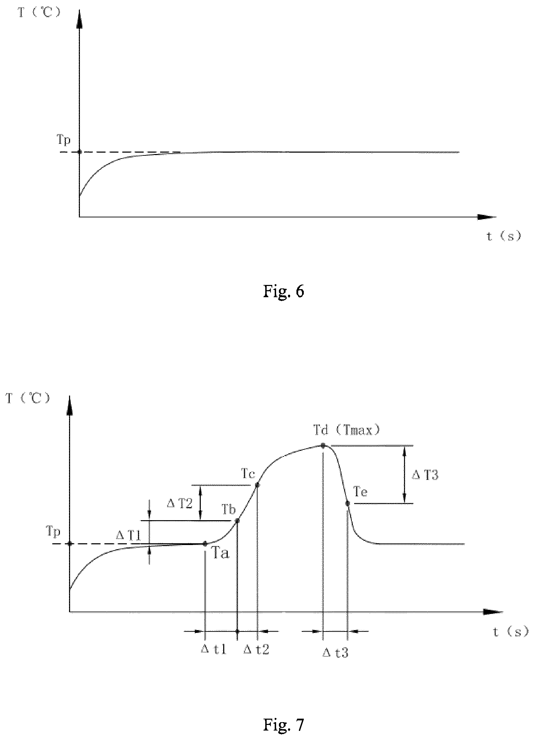

The temperature sensing element 500 is set with a thermal equilibrium state; when the temperature sensing element 500 is in the thermal equilibrium state, its resistance value does not change; at this point, the temperature of the temperature sensing element 500 is the thermal equilibrium temperature Tp. In conjunction with Fig. 6, when the equipment is in a normal operating state, the electric motor 310 drives the fan 320 to rotate, the heating element 330 is energized to generate heat, and the temperature of the heating element 330 rises gradually, so that the temperature of the temperature sensing element 500 rises gradually with the temperature of the heating element 330 till the thermal equilibrium temperature Tp, and maintains at the thermal equilibrium temperature Tp.

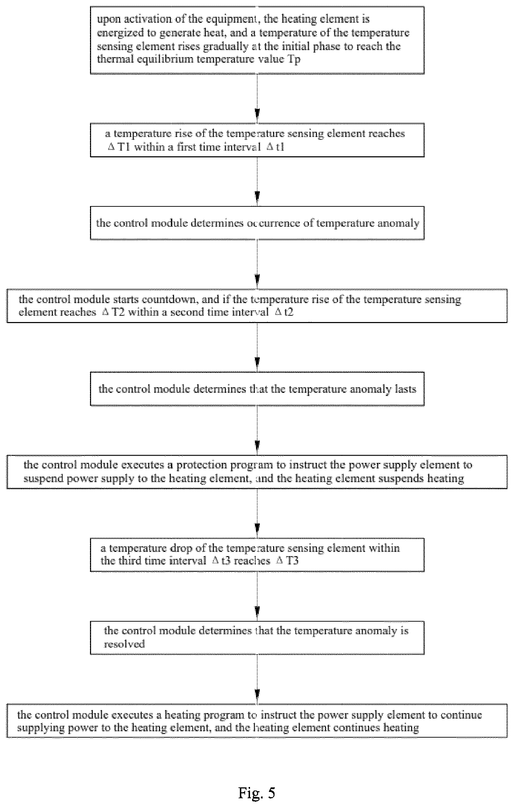

In conjunction with Fig. 5 and Fig. 7, when a circumstance arises where the air outlet 340 is obstructed so that the hot air flow cannot be discharged, or the electric motor 310 fails to drive rotation of the fan 320 so that a hot air flow cannot be formed, the temperature of the hot air assembly 300 rises, and the temperature of the temperature sensing element 500 also rises to Tb from Ta in the first time interval Δ t1; at this point, the control module 200 determines that temperature anomaly occurs to the equipment based on the temperature rise Δ T1 ( Δ T1=Tb-Ta) of the temperature sensing element 500. In order to prevent misjudgment, the control module 200 starts countdown; during the countdown process, the power supply unit 400 continues supplying power to the heating element 330; if the temperature anomaly is resolved timely, the heat of the hot air assembly 300 is timely discharged, and then the temperature of the heating element 330 drops, and the temperature of the temperature sensing element 500 also decreases and returns to the thermal equilibrium temperature Tp. If the temperature anomaly fails to be resolved timely, the heat of the heating element 330 cannot be discharged so that the temperature of the heating element 330 rises; the temperature of the temperature sensing element 500 also rises from Tb to Tc within the second time interval Δ t2; at this point, the control module 200 determines that the temperature anomaly of the equipment continues based on the temperature rise Δ T2 ( Δ T2=Tc-Tb ) of the temperature sensing element 500, and the control module 200 instructs the power supply unit 400 to suspend power supply to the heating element 330, so that the heating element 330 suspends heating.

If the temperature anomaly continues after the heating element 330 suspends heating, the heat generated by the divider element 390 causes the temperature of the temperature sensing element 500 to rise to the thermal equilibrium temperature Tp. During this process, if the actual temperature value of the temperature sensing element 500 exceeds the thermal equilibrium temperature Tp, the control module 200 determines that the temperature anomaly continues based on a temperature signal fed back from the temperature sensing element 500; the control module 200 acquires in real time the actual temperature value of the temperature sensing element 500 and records the maximum actual temperature value Tmax; if the temperature sensing element 500 drops till Δ T3( Δ T3=Td-Te) from the maximum actual temperature value Tmax in the third time interval Δ t3, the control module 200 determines that the temperature anomaly is resolved based on a temperature signal fed back from the temperature sensing element 500, and the control module 200 instructs the power supply unit 400 to supply power to the heating element 330.

In this example embodiment, Δ T1 ( Δ T1=Tb-Ta) ranges from 2°C to 5°C, and Δ t1 ranges from 2s to 4s. In some implementations, Δ T1 is set to 3°C, and Δ t1 is set to 3s.

In this example embodiment, Δ T2 ( Δ T2=Tc-Tb) ranges from 2°C to 5°C, and Δ t2 ranges from 2s to 4s. In some implementations, Δ T2 is set to 3°C, and Δ t2 is set to 3s.

In this example embodiment, Δ T3 ( Δ T3=Td-Te) ranges from 3°C to 6°C, and Δ t3 ranges from 1s to 3s. In some implementations, Δ T3 is set to 5°C, and Δ t3 is set to 2s.

Supposing that the thermal equilibrium temperature Tp of the temperature sensing element 500 is 80°C, if the temperature of the temperature sensing element 500 rises from 80°C (Ta) to 83°C(Tb) or above within 3s ( Δ t1), the control module 200 determines, based on a temperature signal of the temperature sensing element 500, that the temperature anomaly occurs, and then the control module 200 activates a 3s ( Δ t2) countdown, if the temperature of the temperature sensing element 500 continuously rises from 83°C (Ta) to 86°C(Tb) or above within 3s ( Δ t2), the control module 200 determines that temperature anomaly actually occurs to the equipment, the control module 200 instructs the power supply unit 400 to suspend power supply to the heating element 330. Supposing that the maximum actual temperature value Tmax of the temperature sensing element 500 upon occurrence of temperature anomaly is 90°C, when the temperature sensing element 500 drops till 85°C (Te) or below from 90°C (Tmax/Td) within 2s ( Δ t3), the control module 200 determines, based on the temperature signal of the temperature sensing element 500, that the temperature anomaly is resolved, and the control module 200 may instruct the power supply unit 400 to continue supplying power to the heating element 330.

It would be appreciated that the thermal equilibrium temperature Tp of the temperature sensing element 500 may also be set to 78°C, 79°C, 81°C, 82°C, 83°C, 84°C, 85°C, 86°C, 87°C, or any other reasonable value.

The temperature sensing element 500 determines whether temperature anomaly actually occurs to the equipment based on twice dynamic temperature rise signals; in this way, the temperature anomaly processing method provided according to this example embodiment may significantly enhance determination accuracy; if the temperature anomaly does not really occur, the heating element 330 performs heating normally, which can guarantee heating efficiency, as well as the operating efficiency of the equipment.

In this example embodiment, the hot air gun is provided with an indicator indicating temperature anomaly; the indicator may alarm a user by flashing, or alarm a user by a temperature anomaly signal flickering in a display, or alarm a user by voice or other reasonable manner.

It would be appreciated that the power supply unit 400 of the hot air heating equipment may be powered by a battery, or powered by connecting to the mains electricity. If the hot air heating equipment is powered by battery, the battery may be detachably mounted at a bottom portion of the handle 110 via a battery holder.

It would be appreciated that, Δ t1 may also be set to 2s, 2.5s, 3.5s, 4s, or other reasonable duration.

It would be appreciated that, Δ T1 ( Δ T1=Tb-Ta) may also be set to 2°C, 2.5°C, 3.5°C, 4°C, 4.5°C, 5°C, or other reasonable value.

It would be appreciated that, Δ t2 may also be set to 2s, 2.5s, 3.5s, 4s, or other reasonable duration.

It would be appreciated that, Δ T2 ( Δ T2=Tc-Tb) may also be set to 2°C, 2.5°C, 3.5°C, 4°C, 4.5°C, 5°C, or other reasonable value.

It would be appreciated that, Δ t3 may also be set to 1s, 1.2s, 1.5s, 1.7s, 2.1s, 2.3s, 2.5s, 2.7s, 3s, or other reasonable duration.

It would be appreciated that Δ T3 ( Δ T3=Td-Te) may also be set to 3°C, 3.5°C, 4°C, 4.5°C, 5.5°C, 6°C, or other reasonable value.

It would be appreciated that, the hot air heating equipment may also be a blower or other apparatus for outputting a hot air flow; correspondingly, the specific structure of the hot air assembly 300 is not limited to the invention above or the drawings, which may be determined based on a specific equipment type.

It would be appreciated that, to avoid the potential risk in installation due to overheat of the equipment, a fuse may be serially connected on the power supply connected loop of the heating element 330; when the temperature of the heating element 330 reaches a preset safety heat value, the fuse is fused, thereby breaking off the power supply connected loop of the heating element 330.

## Claims

1. A temperature anomaly handling method for hot air heating equipment, the hot air heating equipment comprising a housing, a control module, a hot air assembly disposed in the housing, a power supply unit configured to supply power, and a temperature sensing element configured to sense a heating temperature, the hot air assembly comprising an electric motor, a fan driven by the electric motor, and a heating element energized to generate heat, the electric motor driving the fan to rotate to deliver the heat generated by the heating element out of the housing via an air outlet to form a hot air flow for heating an object, the power supply unit, the electric motor, and the heating element being all controlled by the control module, the temperature sensing element being in signal connection to the control module, **characterized in that** the temperature anomaly handling method comprises:
Step S100, in which in a case that a temperature rise of the temperature sensing element reaches Δ T1 within a first time interval Δ t1, the control module determines occurrence of temperature anomaly based on a temperature signal fed back from the temperature sensing element, and performs step S200;
Step S200, in which the control module starts countdown, and in a case that a temperature rise of the temperature sensing element reaches Δ T2 within a second time interval Δ t2, the control module determines that temperature anomaly lasts based on a temperature signal fed back from the temperature sensing element, and performs step S300;
Step S300, in which the control module executes a protection program.

2. The temperature anomaly handling method according to claim 1, wherein the protection program executed by the control module is to instruct the power supply unit to suspend power supply to the heating element.

3. The temperature anomaly handling method according to claim 1, wherein the temperature anomaly handling method further comprises:
step S400, in which in a case that a temperature drop of the temperature sensing element reaches Δ T3 within a third time interval Δ t3, the control module determines that the temperature anomaly is resolved based on a temperature signal fed back from the temperature sensing element and instructs the power supply unit to supply power to the heating element.

4. The temperature anomaly handling method according to claim 3, wherein the temperature sensing element has a thermal equilibrium temperature Tp, and in step S400, in a case that an actual temperature value of the temperature sensing element exceeds the thermal equilibrium temperature Tp, the control module determines that the temperature anomaly continues based on a temperature signal fed back from the temperature sensing element, the control module acquires in real time the actual temperature value of the temperature sensing element and records a maximum actual temperature value Tmax, and in a case that the temperature drop of the temperature sensing element reaches Δ T3 from the maximum actual temperature value Tmax within the third time interval Δ t3, the control module determines that the temperature anomaly is resolved based on a temperature signal fed back from the temperature sensing element.

5. The temperature anomaly handling method according to claim 1, wherein the temperature sensing element is configured to sense a temperature of the heating element.

6. The temperature anomaly handling method according to claim 5, wherein the temperature sensing element is disposed between the electric motor and the heating element.

7. The temperature anomaly handling method according to claim 1, wherein a divider element is serially connected to a power supply connected loop of the electric motor.

8. The temperature anomaly handling method according to claim 1, wherein Δ T1 ranges from 2°C to 5°C; and/or, the first time interval Δ t1 ranges from 2s to 4s.

9. The temperature anomaly handling method according to claim 1, wherein Δ T2 ranges from 2°C to 5°C; and/or, the second time interval Δ t2 ranges from 2s to 4s.

10. The temperature anomaly handling method according to claim 3, wherein Δ T3 ranges from 3°C to 6°C; and/or, the third time interval Δ t3 ranges from 1s to 3s.

## Patentansprüche

1. Verfahren zur Behandlung von Temperaturanomalien für Heißlufterwärmungsausrüstung, wobei die Heißlufterwärmungsausrüstung ein Gehäuse, ein Steuermodul, eine in dem Gehäuse angeordnete Heißluftbaugruppe, eine zur Stromversorgung konfigurierte Stromversorgungseinheit und ein zur Erfassung einer Heiztemperatur konfiguriertes Temperaturfühlerelement umfasst, wobei die Heißluftbaugruppe einen Elektromotor, einen von dem Elektromotor angetriebenen Lüfter und ein zur Erzeugung von Wärme mit Energie versorgtes Heizelement umfasst, wobei der Elektromotor den Lüfter antreibt, um die vom Heizelement erzeugte Wärme über einen Luftauslass aus dem Gehäuse zu leiten und einen Heißluftstrom zum Erwärmen eines Objekts zu erzeugen, wobei die Stromversorgungseinheit, der Elektromotor und das Heizelement alle vom Steuermodul gesteuert werden und das Temperaturfühlerelement in Signalverbindung mit dem Steuermodul steht, **dadurch gekennzeichnet, dass** das Verfahren zur Behandlung von Temperaturanomalien umfasst:
Schritt S100, in dem in einem Fall, in dem ein Temperaturanstieg des Temperaturfühlerelements innerhalb eines ersten Zeitintervalls Δ t1 einen Wert Δ T1 erreicht, das Steuermodul das Auftreten einer Temperaturabweichung auf der Grundlage eines vom Temperaturfühlerelement zurückgemeldeten Temperatursignals feststellt und Schritt S200 ausführt;
Schritt S200, in dem das Steuermodul einen Countdown startet und in einem Fall, in dem ein Temperaturanstieg des Temperaturfühlerelements innerhalb eines zweiten Zeitintervalls Δ t2 einen Wert Δ T2 erreicht, das Steuermodul auf der Grundlage eines vom Temperaturfühlerelement zurückgemeldeten Temperatursignals feststellt, dass die Temperaturanomalie andauert, und Schritt S300 ausführt;
Schritt S300, in dem das Steuermodul ein Schutzprogramm ausführt.

2. Verfahren zur Behandlung von Temperaturanomalien nach Anspruch 1, wobei das vom Steuermodul ausgeführte Schutzprogramm darin besteht, die Stromversorgungseinheit anzuweisen, die Stromversorgung des Heizelements zu unterbrechen.

3. Verfahren zur Behandlung von Temperaturanomalien nach Anspruch 1, wobei das Verfahren zur Behandlung von Temperaturabweichungen ferner umfasst:
Schritt S400, in dem in einem Fall, in dem ein Temperaturabfall des Temperaturfühlerelements innerhalb eines dritten Zeitintervalls Δ t3 einen Wert Δ T3 erreicht, das Steuermodul auf der Grundlage eines vom Temperaturfühlerelement zurückgemeldeten Temperatursignals feststellt,
dass die Temperaturabweichung behoben ist, und die Stromversorgungseinheit anweist, das Heizelement mit Strom zu versorgen.

4. Verfahren zur Behandlung von Temperaturanomalien nach Anspruch 3, wobei das Temperaturfühlerelement eine thermische Gleichgewichtstemperatur Tp aufweist und in Schritt S400 in einem Fall, in dem ein tatsächlicher Temperaturwert des Temperaturfühlerelements die thermische Gleichgewichtstemperatur Tp überschreitet, das Steuermodul auf der Grundlage eines vom Temperaturfühlerelement zurückgemeldeten Temperatursignals feststellt, dass die Temperaturabweichung weiterhin besteht, das Steuermodul in Echtzeit den tatsächlichen Temperaturwert des Temperaturfühlerelements erfasst und einen maximalen tatsächlichen Temperaturwert Tmax aufzeichnet, und in einem Fall, in dem der Temperaturabfall des Temperaturfühlerelements innerhalb des dritten Zeitintervalls Δ t3 einen Wert Δ T3 vom maximalen tatsächlichen Temperaturwert Tmax erreicht, das Steuermodul auf der Grundlage eines vom Temperaturfühlerelement zurückgemeldeten Temperatursignals feststellt, dass die Temperaturabweichung behoben ist.

5. Verfahren zur Behandlung von Temperaturanomalien nach Anspruch 1, wobei das Temperaturfühlerelement so konfiguriert ist, dass es die Temperatur des Heizelements misst.

6. Verfahren zur Behandlung von Temperaturanomalien nach Anspruch 5, wobei das Temperaturmesselement zwischen dem Elektromotor und dem Heizelement angeordnet ist.

7. Verfahren zur Behandlung von Temperaturanomalien nach Anspruch 1, wobei ein Teilerelement in Reihe mit einer an eine Stromversorgung angeschlossenen Schleife des Elektromotors geschaltet ist.

8. Verfahren zur Behandlung von Temperaturanomalien nach Anspruch 1, wobei Δ T1 im Bereich von 2 °C bis 5 °C liegt; und/oder das erste Zeitintervall Δ t1 im Bereich von 2 s bis 4 s liegt.

9. Verfahren zur Behandlung von Temperaturanomalien nach Anspruch 1, wobei Δ T2 im Bereich von 2 °C bis 5 °C liegt und/oder das zweite Zeitintervall Δ t2 im Bereich von 2 s bis 4 s liegt.

10. Verfahren zur Behandlung von Temperaturanomalien nach Anspruch 3, wobei Δ T3 im Bereich von 3 °C bis 6 °C liegt und/oder das dritte Zeitintervall Δ t3 im Bereich von 1 s bis 3 s liegt.

## Revendications

1. Procédé de traitement des anomalies de température pour un équipement de chauffage à air chaud, l'équipement de chauffage à air chaud comprenant un boîtier, un module de commande, un ensemble à air chaud disposé dans le boîtier, une unité d'alimentation électrique configurée pour fournir de l'énergie, et un élément de détection de température configuré pour détecter une température de chauffage, l'ensemble à air chaud comprenant un moteur électrique, un ventilateur entraîné par le moteur électrique, et un élément chauffant alimenté pour générer de la chaleur, le moteur électrique entraînant le ventilateur en rotation pour délivrer la chaleur générée par l'élément chauffant hors du boîtier par l'intermédiaire d'une sortie d'air afin de former un flux d'air chaud pour chauffer un objet, l'unité d'alimentation électrique, le moteur électrique et l'élément chauffant étant tous commandés par le module de commande, l'élément de détection de température étant en connexion de signal avec le module de commande, **caractérisé en ce que** le procédé de traitement des anomalies de température comprend :
Étape S100, au cours de laquelle, dans le cas où l'augmentation de température de l'élément de détection de température atteint Δ T1 dans un premier intervalle de temps Δ t1, le module de commande détermine l'apparition d'une anomalie de température sur la base d'un signal de température renvoyé par l'élément de détection de température, et exécute l'étape S200 ;
Étape S200, au cours de laquelle le module de commande lance le compte à rebours, et dans le cas où l'augmentation de température de l'élément de détection de température atteint Δ T2 dans un deuxième intervalle de temps Δ t2, le module de commande détermine que l'anomalie de température dure sur la base d'un signal de température renvoyé par l'élément de détection de température, et exécute l'étape S300 ;
Étape S300, au cours de laquelle le module de commande exécute un programme de protection.

2. Procédé de traitement des anomalies de température selon la revendication 1, dans lequel le programme de protection exécuté par le module de commande consiste à ordonner à l'unité d'alimentation électrique de suspendre l'alimentation électrique de l'élément chauffant.

3. Procédé de traitement des anomalies de température selon la revendication 1, dans lequel le procédé de traitement des anomalies de température comprend en outre :
l'étape S400, au cours de laquelle, dans le cas où une chute de température de l'élément de détection de température atteint Δ T3 dans un troisième intervalle de temps Δ t3, le module de commande détermine que l'anomalie de température est résolue sur la base d'un signal de température renvoyé par l'élément de détection de température et ordonne à l'unité d'alimentation électrique d'alimenter l'élément chauffant.

4. Procédé de traitement des anomalies de température selon la revendication 3, dans lequel l'élément de détection de température a une température d'équilibre thermique Tp, et à l'étape S400, dans le cas où une valeur de température réelle de l'élément de détection de température dépasse la température d'équilibre thermique Tp, le module de commande détermine que l'anomalie de température se poursuit sur la base d'un signal de température renvoyé par l'élément de détection de température, le module de commande acquiert en temps réel la valeur de température réelle de l'élément de détection de température et enregistre une valeur de température réelle maximale Tmax, et dans le cas où la chute de température de l'élément de détection de température atteint Δ T3 par rapport à la valeur de température réelle maximale Tmax dans le troisième intervalle de temps Δ t3, le module de commande détermine que l'anomalie de température est résolue sur la base d'un signal de température renvoyé par l'élément de détection de température.

5. Procédé de traitement des anomalies de température selon la revendication 1, dans lequel l'élément de détection de température est configuré pour détecter la température de l'élément chauffant.

6. Procédé de traitement des anomalies de température selon la revendication 5, dans lequel l'élément de détection de température est placé entre le moteur électrique et l'élément chauffant.

7. Procédé de traitement des anomalies de température selon la revendication 1, dans lequel un élément diviseur est connecté en série à une boucle d'alimentation du moteur électrique.

8. Procédé de traitement des anomalies de température selon la revendication 1, dans lequel Δ T1 est compris entre 2°C et 5°C ; et/ou le premier intervalle de temps Δ t1 est compris entre 2s et 4s.

9. Procédé de traitement des anomalies de température selon la revendication 1, dans lequel Δ T2 est compris entre 2°C et 5°C ; et/ou, le deuxième intervalle de temps Δ t2 est compris entre 2s et 4s.

10. Procédé de traitement des anomalies de température selon la revendication 3, dans lequel Δ T3 est compris entre 3°C et 6°C ; et/ou le troisième intervalle de temps Δ t3 est compris entre 1s et 3s.
